# EUROPEAN PATENT APPLICATION

(11) **EP 3 121 093 A2**
(43) Date of publication of application: **25.01.2017**
(21) Application number: 16180440.6
(22) Date of filing: 20.07.2016
(51) Int. Cl.: B62B 9/12

(54) **COMPACT FOLDING BABY STROLLER**

(30) Priority: 20.07.2015 US 201562194350 P
(71) Applicant: Baby Jogger, LLC, Richmond VA 23227 (US)
(72) Inventor: Pujol, Jordi Dorca, Sant Joan de les Abadesses (ES)
(74) Representative: Schmid, Nils T.F.

(57) **Abstract**

The stroller can folded into a more compact space. The stroller can include a pair of handle frames (30) that include an upper handle frame (31), a lower handle frame (32), and a handle frame folding mechanism (50). The stroller can also include first and second rear wheel frames (20), at least one front wheel frame (10), a first frame folding mechanism (40) rotatably connecting the front wheel frame, the first rear wheel frame and one of the handle frames, and a second frame folding mechanism rotatably connecting the front wheel frame, the second rear wheel frame, and the other of the handle frames. The upper handle frames, lower handle frames, rear wheel frames and front wheel frames can be substantially the same length. The stroller can also include a belly bar (62) attached to the first and second frame folding mechanisms that can operate as a pull handle when the stroller is in a folded, storage configuration.

## Description

### CROSS-REFERENCE TO RELATED APPLICATION

This application claims priority under 35 U.S.C. §119 to U.S. Provisional Patent Application No. 62/194,350 filed July 20, 2015, and titled "Baby Stroller," the entire contents of which are hereby incorporated herein by reference for all purposes.

### TECHNICAL FIELD

The present disclosure relates generally to infant and toddler strollers and move particularly to a compact folding infant and toddler stroller.

### BACKGROUND

Many conventional baby strollers have a frame with one folding mechanism on each side that allows the baby stroller to be converted from an unfolded in-use position to a folded position that has a reduced volume for ease of storage or transportation. In a conventional stroller, the three main frame members, front wheel frame, rear wheel frame and handle frame are approximately the same length so that when the stroller is folded the frame members are approximately aligned, In such cases, the size of the folded stroller is limited to the length of the longest frame member. As such, the size (which refers to the volume of the stroller in the folded position) may still take up more storage space (or be longer than desired) and a larger size or volume may result in inconvenience during transportation or carrying of the baby stroller.

### BRIEF DESCRIPTION OF THE EXAMPLE DRAWINGS

Reference will now be made to the accompanying drawings, which are not necessarily drawn to scale.
Figures 1A-E are various views of a stroller frame in the unfolded, in-use configuration according to one example embodiment of the disclosure.
Figure 2 is a right side elevation view of the stroller frame of Figures 1A-E in the folded, storage configuration according to one example embodiment of the disclosure.
Figure 3 is a partial perspective view of the handle grip of the handle frame of the stroller frame of Figures 1A-E and 6A-B according to one example embodiment of the disclosure.
Figure 4 is a partial perspective view of a frame folding mechanism of the stroller frame of Figures 1A-E and 6A-B according to one example embodiment of the disclosure.
Figure 5A-C are various engaged and disengaged views of a frame lock latch and a frame lock latch receiver of the stroller of Figure 1 according to one example embodiment of the disclosure.
Figures 6A-B are side and perspective views of the stroller of Figure 1 with an optional belly bar in the unfolded, in-use configuration according to one example embodiment of the disclosure.
Figures 7A-B are top and perspective views of the belly bar on the stroller of 6A-B according to one example embodiment of the disclosure,
Figure 8 is a perspective view of the stroller of 6A-B with belly bar in the folded, storage configuration according to one example embodiment of the disclosure.
Figure 9 is a partial view of a secondary release mechanism for the frame folding mechanism of Figures 1A-E and 6A-B according to one example embodiment of the disclosure.
Figure 10 is a partial perspective view of an optional modification presented on one of the handle frame folding mechanisms of the folding stroller frame of Figures 1A-E and 6A-B according to one example embodiment of the disclosure.

### DETAILED DESCRIPTION OF EXAMPLE EMBODIMENTS

Example embodiments will now be described more fully hereinafter with reference to the accompanying drawings, in which example embodiments are shown. The concepts disclosed herein may, however, be embodied in many different forms and should not be construed as limited to the example embodiments set forth herein. Rather, these embodiments are provided so that this disclosure will be thorough and complete, and will fully convey the scope of the concepts to those skilled in the art. Like numbers refer to like, but not necessarily the same or identical, elements throughout.

Certain dimensions and features of the example foldable stroller are described herein using the term "approximately." As used herein, the term "approximately" indicates that each of the described dimensions is not a strict boundary or parameter and does not exclude functionally similar variations therefrom. Unless context or the description indicates otherwise, the use of the term "approximately" in connection with a numerical parameter indicates that the numerical parameter includes variations that, using mathematical and industrial principles accepted in the art (*e.g*., rounding, measurement or other systematic errors, manufacturing tolerances, etc.), would not vary the least significant digit.

In addition, certain relationships between dimensions of the example foldable stroller and between features of the example foldable stroller are described herein using the terms "substantially" and "substantially equal." As used herein, the terms "substantially" and "substantially equal" indicate that the equal relationship is not a strict relationship and does not exclude functionally similar variations therefrom. Unless context or the description indicates otherwise, the use of the term "substantially" or "substantially equal" in connection with two or more described dimensions indicates that the equal relationship between the dimensions includes variations that, using mathematical and industrial principles accepted in the art (*e.g*., rounding, measurement or other systematic errors, manufacturing tolerances, etc.), would not vary the least significant digit of the dimensions. As used herein, the term "substantially constant" indicates that the constant relationship is not a strict relationship and does not exclude functionally similar variations therefrom. As used herein, the terms "substantially perpendicular" and "substantially orthogonal" indicate that the perpendicular relationship is not a strict relationship and does not exclude functionally similar variations therefrom.

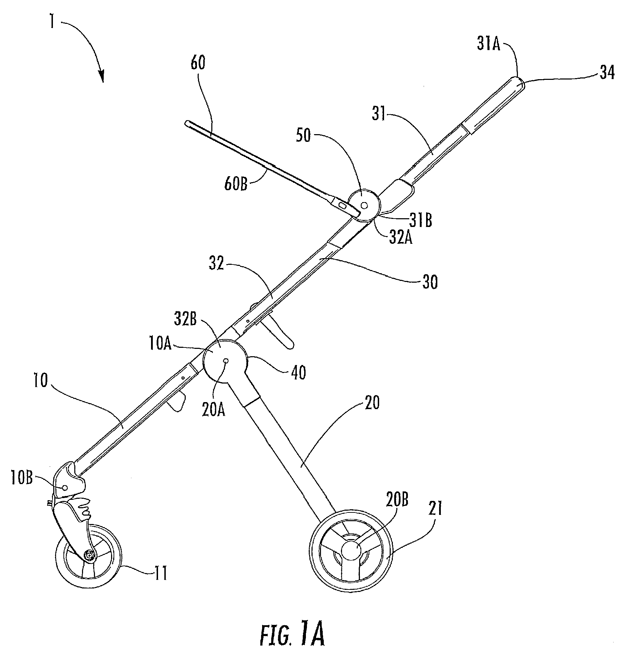

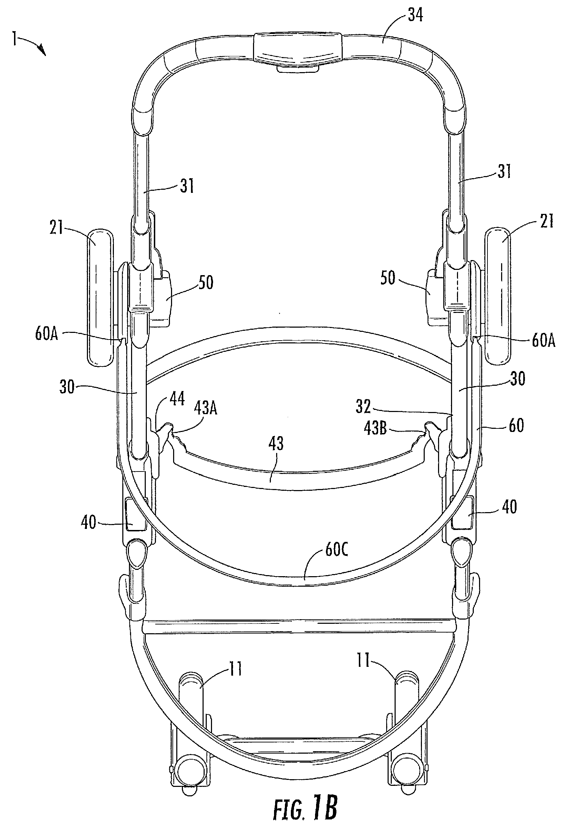

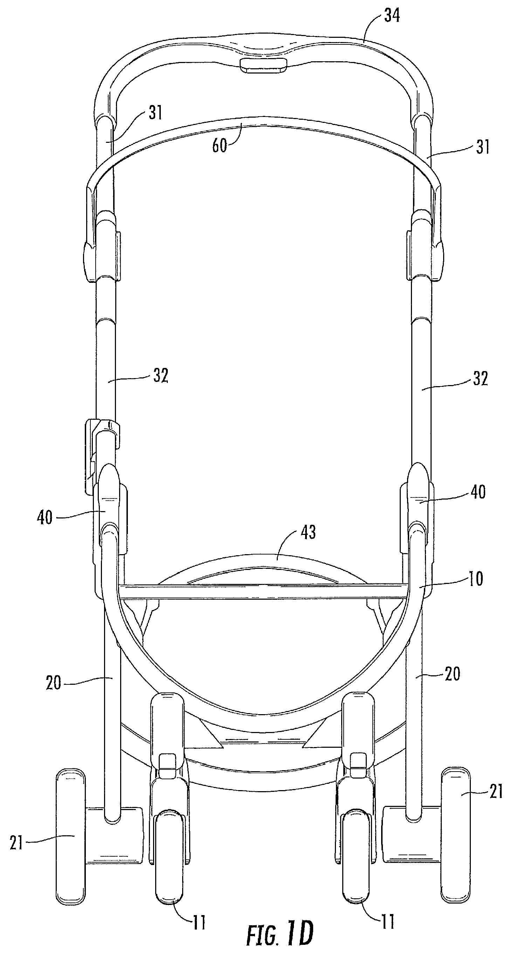

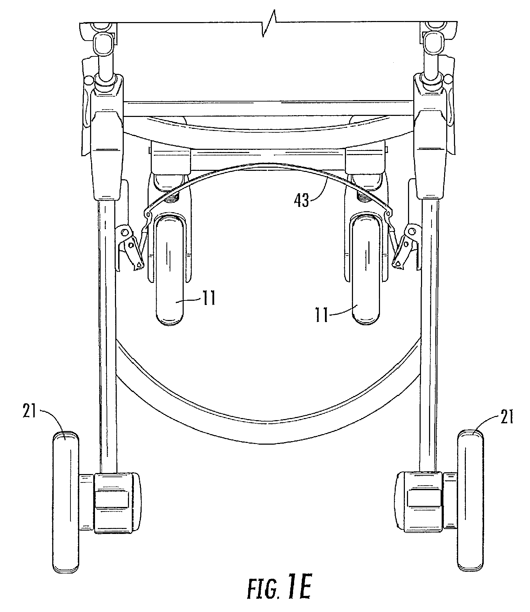

Figures 1A-E are various views of a foldable stroller frame 1 in the unfolded, in-use configuration according to one example embodiment of the disclosure. Now referring to Figures 1A-E, the example foldable stroller frame 1 can include a pair of handle frames 30, each disposed on corresponding left and right sides of the stroller frame 1. Each handle frame 30 can be constructed of a solid core or tubing material made of metal or plastic. Each handle frame 30 can include a pair (e.g., left and right side) of upper handle frames 31 and a corresponding pair (e.g., left and right side) of lower handle frames 32. Each of the upper handle frames 31 can extend from a corresponding first end 31A to a corresponding distal second end 31B and define a linear distance for each of the upper handle frames 31. Each of the lower handle frames 32 can extend from a first end 32A to a distal second end 32B and define a second linear distance for each of the lower handle frames 32. In certain example embodiments, the foldable stroller frame 1 further includes a handle grip portion 34 that extends between the corresponding first ends 31A of each of the upper handle frames 31 and couple the upper handle frames 31 together. In certain example embodiments, each of the upper handle frames 31 and the handle grip portion 34 are made of separate pieces of solid core or tubing material made of metal or plastic. Alternatively, each of the upper handle frames 31 and the handle grip portion 34 can be integrally formed from a single unitary piece of material.

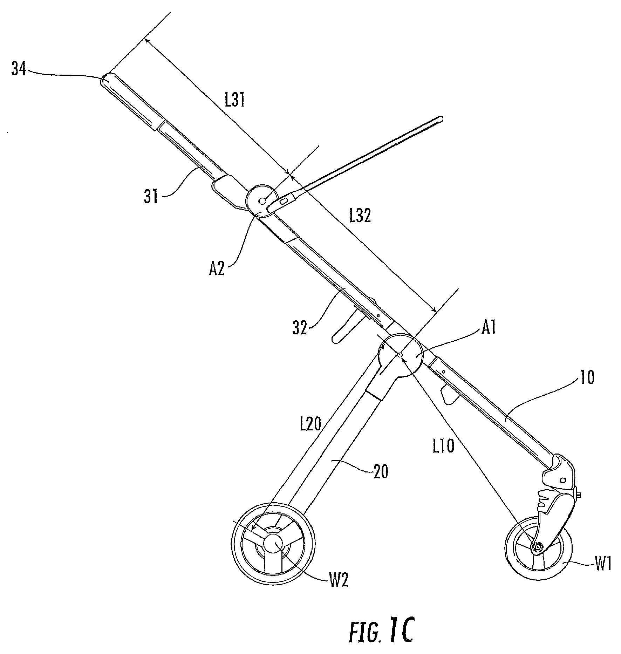

Each of the upper handle frames 31 can be rotatably coupled to the lower handle frame 32. In one example embodiment, each of the second ends 31B of the upper handle frames 31 is coupled to a corresponding handle frame folding mechanism 50. Further, each of the first ends 32A of the lower handle frame 32 are coupled to the corresponding handle frame folding mechanism 50 to rotatably couple the lower handle frame 32 to the upper handle frame 31 on each of the left and right sides of the stroller frame 1. In certain example embodiments, the handle frame folding mechanism 50 may be disposed substantially in a central portion of the handle frame 30. For example, the upper handle frame 31 and the lower handle frame 32 may be substantially the same length from the pivot axis A2 of the handle folding mechanism 50 (as shown in Figure 1C). The upper handle frame 31 and the lower handle frame 32 can be substantially linear in one of the unfolded configurations and substantially parallel in the folded configuration, such as in a standard butt hinge. Alternatively, either the upper handle frame 31 or the lower handle frame 32 may have a smaller length or width such that one frame 31 or 32 may be folded to be within the other frame.

In certain example embodiments, the handle frame folding mechanism 50 can include a mechanism to lock the handle frame 30 in at least an unfolded configuration. Further, in this or other example embodiments, the handle frame folding mechanism 50 may be able to be locked in the folded storage position and in a plurality of handle height adjustment positions. In another example embodiment, the handle frame 30 can include two folding mechanisms on each side of the stroller frame 1, one for folding the handle frame 30 (e.g., folding the lower handle frame 32 and the upper handle frame 31) in half and the other for adjusting the height of the handle grip 34. In still another example embodiment, the handle frame 30 can include two handle frame folding mechanisms and three handle frame members on each of the left and right sides of the stroller frame 1 to reduce the handle frame to one third the length of the handle frame 30 in the folded, storage configuration.

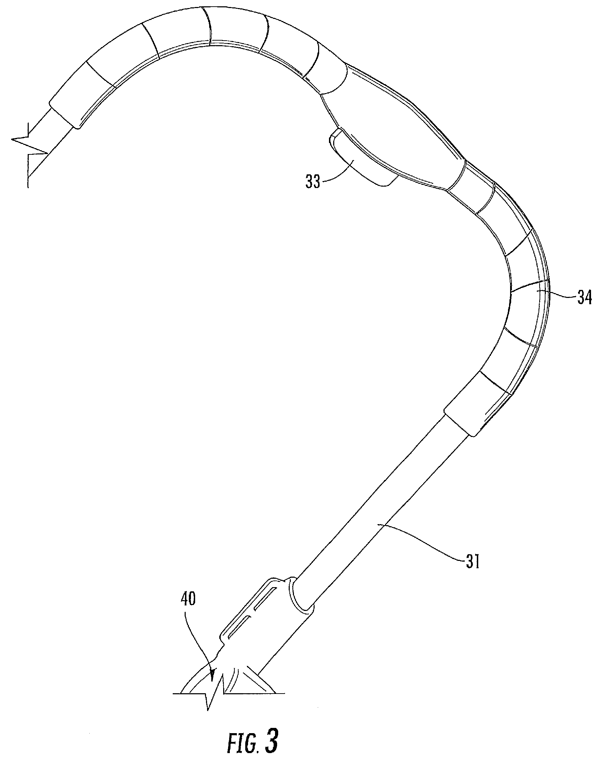

In an alternate example embodiment, the handle frame folding mechanisms can be eliminated and replaced with a telescoping handle frame that includes the lower handle frame portion and the upper handle frame portion. In this alternate embodiment, the upper handle frame portion can adjusted between a retracted position, where a substantial portion (e.g., more than 50% and preferably more than 70% and more preferably more than 90% of the longitudinal length (e.g., from the first end 31A to the second end 31B) can be received within a hollow interior of each of the lower handle frames 32, and an extended position substantially similar to that shown in Figure 1A. Adjacent one or both of the second ends 31B, the upper handle frame 31 can include an adjustable latching mechanism that operatively couples to a corresponding latching mechanism positioned adjacent to the first end 32A of one or both of the lower handle frames. The handle folding mechanism latch 33 (Figure 3) may then be operatively coupled to the adjustable latching mechanism(s) to release the latching mechanism when the user wants to move the upper handle frame 31 into the retracted position. The upper handle frames 31 may then be slidably received into the interior of the corresponding lower handle frames 32. While the alternative embodiment is described as having the upper handle frames 31 being slidably received into the lower handle frames 32, the operation can be reversed and the lower handle frames 32 can be slidably received into hollow interiors of the corresponding upper handle frames 32 such that the same substantial portions of the lower handle frames 32 are received within the upper handle frames 31. Further, while the example alternate embodiment is described with a single telescoping member, alternatively either the upper handle frames 31 or the lower handle frames 32 may be modified to have multiple members that telescope into one another in a similar manner to achieve the same reduction of the substantial portion of the upper handle frames 31 or lower handle frames 32 as described above.

The example folding stroller 1 can also include one or more front wheel frames 10 that extend from a pair of first ends 10A to a distal second end 10B. Each front wheel frame 10 can be constructed of a solid core or tubing material made of metal or plastic. In certain example embodiments, each of the first ends 10A of the front wheel frame 10 is rotatably coupled to the corresponding second ends 32B of the lower handle frames 32 via corresponding frame folding mechanisms 40 on each of the left and right sides of the stroller frame 1. One or more front wheels 11 can be coupled to the front wheel frame 10. In certain example embodiments, two front wheels 11 are provided. In another example embodiment, one front wheel 11 is provided on the stroller frame 1. Each front wheel 11 can rotate about a horizontal axis parallel or substantially parallel to the surface that the stroller frame 1 is disposed on. In certain example embodiments, each front wheel 11 can also rotate about a vertical axis that is orthogonal or substantially orthogonal to surface that the stroller frame 1 is disposed on. In some example embodiments, the front wheels 11 may be rotatably or foldably connected to the front wheel frame 10 such that the wheels 11 may be rotated or folded to a position that reduces the size, length, or volume of the stroller frame 1 in its folded, storage configuration. In other example embodiments, the front wheels 11 may be removably coupled to the front wheel frame 10 such that the front wheels 11 may be removed from the front wheel frame 10 to reduce the size, length, or volume of the stroller frame 1 in its folded, storage configuration.

The example folding stroller 1 can also include one or more rear wheel frames 20 that extend from a pair of first ends 20A to a distal second end 20B. For example, as shown in Figure ID, the folding stroller frame 1 can include a pair of rear wheel frames 20, with each of the rear wheel frames 20 disposed on corresponding left and right sides of the stroller frame 1. Each rear wheel frame 20 can be constructed of a solid core or tubing material made of metal or plastic. In certain example embodiments, each of the first ends 20A of the rear wheel frame 20 is rotatably coupled to the corresponding second ends 32B of the lower handle frames 32 and the corresponding first ends 10A of the front wheel frame 10 via corresponding frame folding mechanisms 40 on each of the left and right sides of the stroller frame 1. One or more rear wheels 11 can be coupled to each rear wheel frame 20. In certain example embodiments, two rear wheels 21 are provided, one on each rear wheel frame 20; however, greater or fewer numbers of wheels are contemplated within this disclosure. Each rear wheel 21 can rotate about a horizontal axis parallel or substantially parallel to the surface that the stroller frame 1 is disposed on. In some example embodiments, the rear wheels 21 may be rotatably or foldably connected to the rear wheel frame 20 such that the rear wheels 21 may be rotated or folded to a position that reduces the size, length, or volume of the stroller frame 1 in its folded, storage configuration. In other example embodiments, the rear wheels 21 may be removably coupled to the rear wheel frame 20 such that the rear wheels 11 may be removed from the rear wheel frame 20 to reduce the size, length, or volume of the stroller frame 1 in its folded, storage configuration.

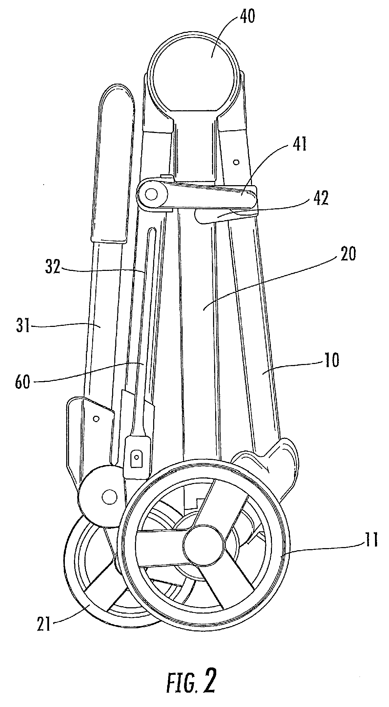

In the example embodiment of the stroller frame 1 shown in Figures 1A-2, the front wheel frame(s) 10 rotates (as viewed from Figure 1A) counterclockwise toward the rear wheel frame 20 to move from the unfolded, in-use configuration (Figure 1A) to the folded, storage configuration (Figure 2). Similarly, the handle frame 30 rotates (as viewed from Figure 1A) clockwise toward the rear wheel frame 20 to move from the unfolded, in-use configuration (Figure 1A) to the folded, storage configuration (Figure 2).

The example stroller frame 1 can also include a seat or seat connector (not shown). In certain example embodiments, the seat can be permanently coupled to the stroller frame 1. Alternatively, the seat can be removably coupled to the stroller frame 1. For example, the stroller frame can further include a pair of seat connectors, each disposed on corresponding left and right sides of the stroller frame adjacent, for example the frame folding mechanism 40, The front wheel frame 10, the rear wheel frame 20, and the handle frame 30 are rotatably connected to one-another by the frame folding mechanism 40 and rotate relative to each other from the folded, storage configuration (as shown in Figure 2) to the unfolded, in-use configuration (as shown in Figures 1A-E.

In certain example embodiments of the stroller frame of Figures 1A-2, each of the handle frame folding mechanisms 50 may be used to rotate the corresponding (e.g., left or right) upper handle frame 31 relative to the corresponding (e.g., left or right) lower handle frame 32 in either the clockwise or counterclockwise direction about the pivot axis of the handle frame folding mechanism 50. In one example, each of the upper handle frame members 31 may be folded to a compact folded handle configuration wherein the corresponding longitudinal axis of the upper handle frame 31 and longitudinal axis of the lower handle frame 32 are substantially parallel to each other. As used herein, the term "substantially parallel" means "within 20 degrees of a true parallel position" in its most compact position.

For example, as shown in Figure 1A, the upper handle frame 31 (and its longitudinal axis) are presented in a substantially linear orientation with the lower handle frame 32 (and its longitudinal axis) and the front wheel frame 10. From this substantially linear position, the upper handle frame 31 may be rotated in the counterclockwise or the clockwise direction (relative to the view of Figure 1A) around a pivot axis in the handle frame folding mechanism 50 approximately 180 degrees such that the upper handle frame 31 would be adjacent to the lower handle frame 32. The handle frame folding mechanism 50 may include a lock or stop to retain the upper handle frame 31 and the lower handle frame 32 in the substantially parallel handle frame folded configuration (as shown in Figure 2). With the handle frame 30 in its folded configuration, the frame folding mechanism 40 may be unlocked and the handle frame 30, front wheel frame 10, and the rear wheel frame 20 may be rotated relative to each other into the folded storage configuration of the stroller 1, as shown in Figure 2. Alternatively, the order of use of each folding mechanism 40, 50 may be reversed. Example embodiments of the folding mechanisms 40, 50 are described in U.S. Patent Nos. 7,632,035; 6,095,548; 6,105998; 6,991,248; and 6,102,431, the entire contents of each of which are hereby incorporated herein by reference for all purposes.

In this or other example embodiments, the handle frame folding mechanism 50 may also include one or more stops between the linear position of the upper frame member 31 and the lower frame member 32 (shown in Figures 1A-E) and handle frame folded position configuration (shown in Figure 2). The one or more stops (not shown) can allow the height of the upper handle frame 31 near the first end 31A to be adjusted relative to the ground level or surface that the wheels 11, 21 of the stroller frame 1 are rolling on. The adjustment of the height of the upper handle frame 31 can accommodate the different heights of the user and/or the different heights that each user desires the handle to be at when pushing the stroller frame 1. The example stops may be used to adjust the height of the first end 31A of the upper handle frame in any desired increments.

For example, each stop may be used to adjust the height of the first end 31A of the upper handle frame 31 in a number of positions above and/or below the linear position. For example, with reference to Figure 1A, the upper handle frame 31 may rotate relative to the lower handle frame 32 counterclockwise such that the handle grip portion 34 of the stroller frame 1 along the first end 31A is raised in height in 0.5 to 2 inch increments with the use of the different stops in the handle frame folding mechanism. In addition or in the alternative, the upper handle frame 31 may rotate relative to the lower handle frame 32 clockwise such that the handle grip portion 34 of the stroller frame 1 along the first end 31A is lowered in height in 0.5 to 2 inch increments to lower the first end 31A of the upper handle frame 31. Further, the handle folding mechanism 50 can include a multitude of stops that fix the first end 31A of the upper handle frame 31 at various heights at a position within 30 degrees on either side of the linear position and may also rotate without any further stop positions to the folded configuration shown in Figure 2.

Thus, in certain example embodiments, the handle frame folding mechanism 50 allows rotation of the upper handle frame 31 from a position adjacent to and substantially parallel to the lower handle frame 32 to a position past the relative linear position (as shown in Figure 1A) of the lower handle frame 32 and the upper handle frame 31. In certain example embodiments, the upper handle frame 31 can be rotated about the pivot axis of the handle frame folding mechanism 50 from a position adjacent to and substantially parallel to the lower handle frame handle 32 to a position past the relative linear position (as shown in Figure 1A) of the lower handle frame 32 and the upper handle frame 31 to a position wherein the upper handle frame 31 is substantially parallel to a plane of the ground or other surface. As used herein, the "plane of the ground" is defined by the bottom of the wheels 11, 21 in contact with the surface on which the stroller frame 1 is rolling or resting.

In some example embodiments, the upper handle frame 31 can rotate counterclockwise (as shown relative to Figure 1A) relative to the lower handle frame 32 to the handle folded configuration. In other example embodiments, the handle frame 30 may rotate counterclockwise forward about the pivot axis of the frame folding mechanism 40 to be adjacent to the front wheel frame 10 and the upper handle 31 may then rotate clockwise about the pivot axis of the handle frame folding mechanism 50 into the handle frame folded configuration.

In certain example embodiments the combined linear distance of the upper handle frame 31, from the first end 31A to the second end 31B, and the second linear distance of the lower handle frame 32, from the first end 32A to the second end 32B, is approximately twice as long as either the linear distance of the front wheel frame 10, from the first end 10A to the second end 10B, the linear distance of each of the rear wheel frames 20, from the first end 20A to the second end 20B, or both. However, the upper handle frame 31 is rotatably coupled to the lower handle frame 32 via the handle folding mechanism 50. That allows the handle frame 30 to be folded such that the length of the handle frame 30 in the folded configuration is approximately the same length as linear distance of the front wheel frame 10, the rear wheel frame 20 or both the front wheel frame 10, rear wheel frame 20.

For example, as shown in Figure 1C, in order to provide a more compact folded configuration for the stroller frame 1, each of the major frame members (the upper handle frame 31, the lower handle frame 32, the front wheel frame 10 and the rear wheel frame 20) should have substantially equivalent lengths. As used herein, the four major frame members have "substantially equivalent lengths" if the length of each of the major frame members 31, 32, 10, and 20 is within 25% of the average of the lengths of the major frame members 31, 32, 10, and 20. In other example embodiments, the lengths of the four major frame members 31, 32, 10, and 20 are within 10% of the average of the lengths of the major frame members 31, 32, 10, and 20. The lengths of each of the major frame members 31, 32, 10, and 20 can be determined as shown in Figure 1C.

The lengths of the major frame members 31, 32, 10, and 20 are measured from their respective rotational axes of the folding mechanisms 40, 50. For example, as shown in Figure 1C, the length L10 of the front wheel frame 10 is measured from the rotational axis A1 of the frame folding mechanism 40 along a line to the rotational axis WI of the front wheel 11. The length L20 of the rear wheel frame 20 is measured from the rotational axis A1 of the frame folding mechanism 40 along a line to the rotational axis W2 of the rear wheel 21. The length L32 of the lower handle frame 32 is measured from the rotational axis A1 of the frame folding mechanism 40 along a line to the rotational axis A2 of the handle frame folding mechanism 50. The length of the upper handle frame 31 is measured from the end of the handle grip 34 along a line to the rotational axis A2 of the handle frame folding mechanism 50. As shown in Figure 2, in one example, the upper handle frame 31 and the lower handle frame 32 have substantially equal lengths (within 10%, for example.) In other example embodiments, each handle frame 30 along the corresponding left and right sides of the stroller frame 1 may include at least two components that telescope within one another (e.g., the upper handle frame 31 could telescope within the lower handle frame 32 and could include a spring-loaded button on the upper handle frame 31 and an aperture for receiving the spring-loaded button on the lower handle frame 32 (or vice versa) for engaging/locking the handle frame 30 in the extended position without the need for the handle frame folding mechanism 50) to reduce the overall length of the handle frame 30 for adjusting the height of the handle grip and/or for compactly storing the stroller frame 1 in the folded configuration. In other example embodiments, the major frame members 31, 32, 10, and 20 may be any relative length.

Figure 3 is a partial perspective view of upper handle frame 31 of the folding stroller frame 1 according to one example embodiment of the disclosure. Referring to Figures 1A-3, the stops in each of the handle frame folding mechanisms 50 may be engaged and disengaged using the handle folding mechanism latch 33 or other appropriate mechanism. The handle folding mechanism latch 33 may be disposed along and at least partially within and extend out from the handle grip portion 34 of the upper handle frame 31. In one example embodiment, the handle folding mechanism latch 33 may be a spring-biased hand-squeezable latch, button, or trigger that moves from an extended position to a retracted position and is spring-biased into the extended position, wherein in the extended position the handle folding mechanism latch 33 extends out from the handle grip portion 34 a first amount and in the retracted potion the latch 33 extends out from the handle grip portion 34 a second amount that is less than the first amount. The handle folding mechanism latch 33 can be operably coupled to one or more cables or wires that extend from the handle folding mechanism latch 33 through the handle grip portion 34 of the upper handle frame 31, through each of the upper handle frames 31 and to a mechanism, such as a movable latch or pin, for engaging and disengaging with the handle frame folding mechanism 50 to adjust the mechanism 50 from the locked configuration (wherein rotation about the pivot axis of the handle frame folding mechanism 50 is prevented) to an unlocked configuration (wherein rotation about the pivot axis of the handle frame folding mechanism 50 occurs).

Referring back to Figures 1A-E, the example stroller frame 1 can also include a canopy frame 60. The canopy frame 60 can be rotatably coupled to the handle frame 30. In one example embodiment, the canopy frame 60 can include a pair of corresponding first ends 60A, a pair of arms 60B extending from the first ends 60A and front member 60C coupling together the pair of arms 60B. In one example embodiment, the first ends 60A, pair of arms 60B and front member 60C are integrally formed together from a single piece of material. Each of the first ends 60A can be directly or indirectly coupled to a corresponding one of the handle frame folding mechanisms 50 to allow the canopy frame 60 to rotate with respect to the handle frame 32 from a first position, where the arms 60B of the canopy frame are parallel or substantially parallel with the longitudinal axis of the upper frame handle 31, to a second position as shown in Figure 1A. The canopy frame 60 can be made from metal or plastic solid or tubular material. Further, all or at least a portion of the canopy frame 60 can be covered in soft goods or other fabric material to provide a shade over the seating area of the stroller frame 1.

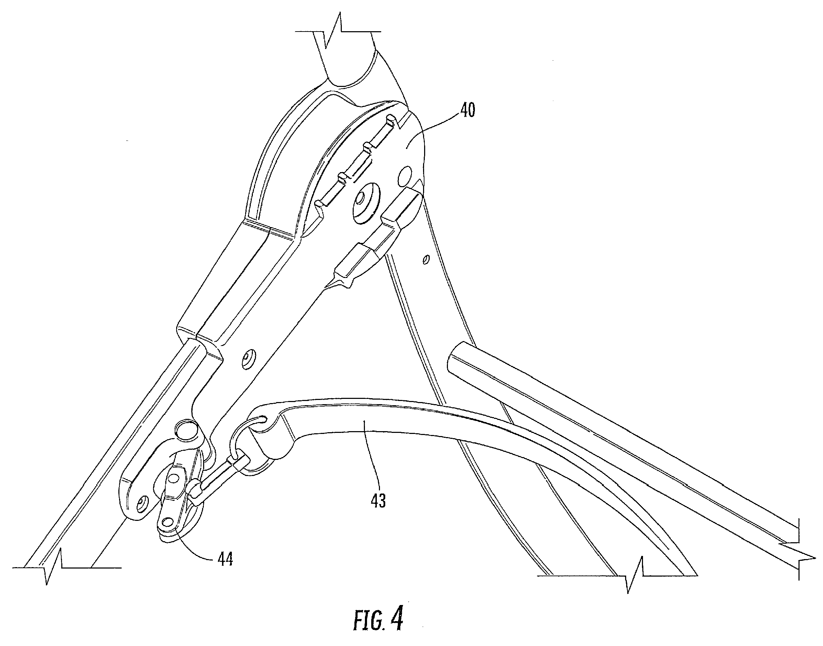

Figure 4 is a partial perspective view of one of the frame folding mechanisms 40 of the stroller frame 11 according to one example embodiment of the disclosure. Now referring to Figures 1A-E and 4. the folding stroller frame 11 can also include one or more unlocking mechanism 44. Each unlocking mechanism 44 can be operably coupled to a corresponding one of the frame folding mechanisms 40. In one example embodiment, each unlocking mechanism 44 includes a manually adjustable lever that rotates about an axis and that includes an elongated member that is spring-biased into a first, locking position and can be pulled or pushed to rotate about the axis into a second, unlocking position to unlock the frame folding mechanism 40 and allow one or more of the handle frame 30, front wheel frame 10, and rear wheel frame 20 to rotate about the frame folding mechanism 40.

The folding stroller frame 1 can also include a frame folding mechanism unlocking strap 43 coupled to each of the unlocking mechanisms 44. In one example embodiment, the frame folding mechanism unlocking strap 43 can include a first end 43A coupled to a first unlocking mechanism 44 and a distal second end 43B coupled to a second unlocking mechanism 44. The frame folding mechanism unlocking strap 43 can be made from fabric, plastic, or a combination thereof. In use, a user of the stroller can provide a pull force on the frame folding mechanism unlocking strap 43 to simultaneously cause each of the unblocking mechanisms 44 to move from the first, locking position, to the second, unlocking position to unlock both of the frame folding mechanisms 40 with one hand at one time and allow one or more of the handle frame 30, front wheel frame 10, and rear wheel frame 20 to rotate about the frame folding mechanism 40.

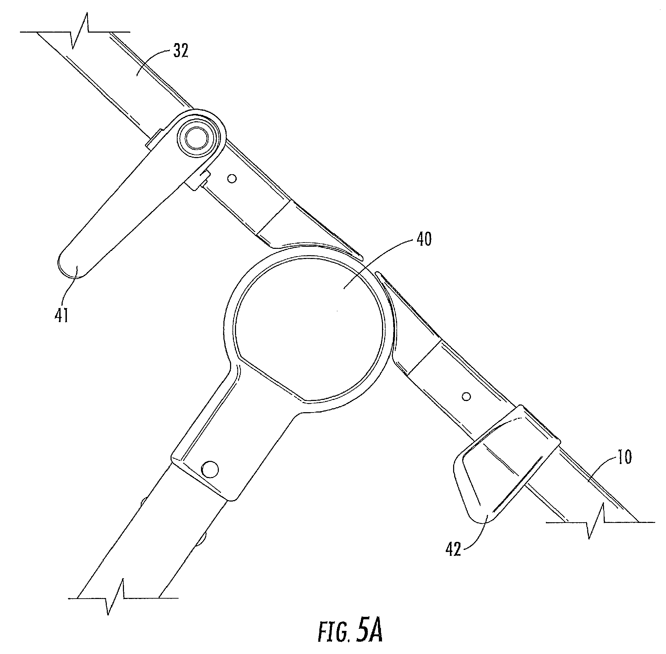

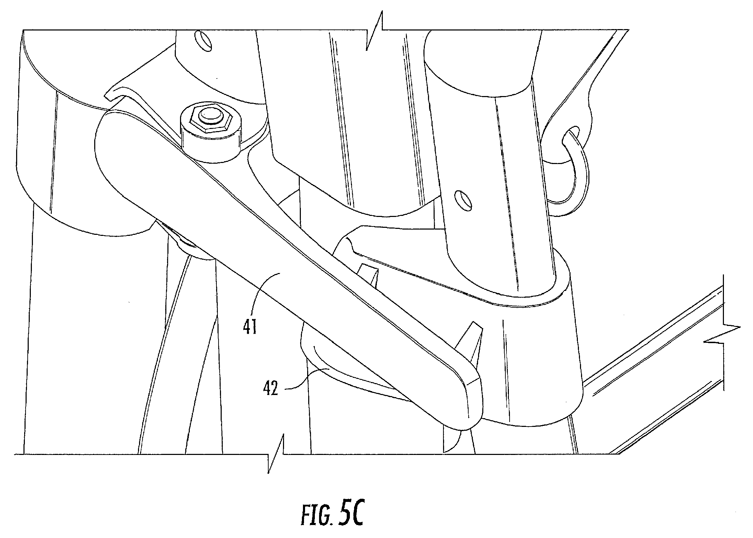

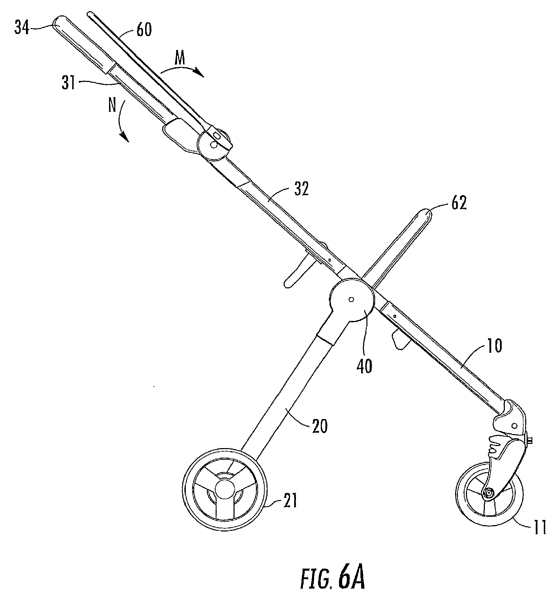

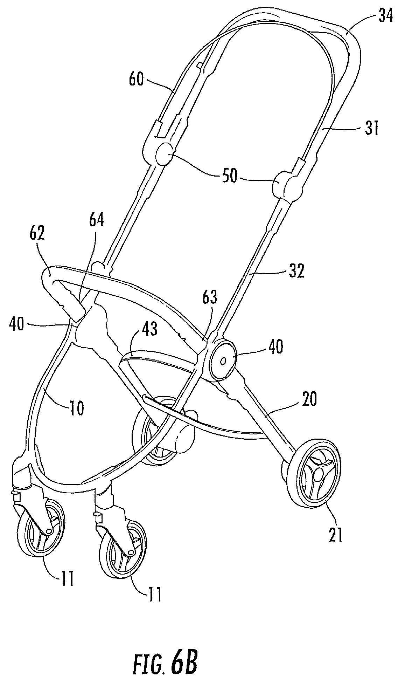

Figures 5A-C are various views of a frame lock latch and a frame lock latch receiver for the stroller frame of Figures 1A-E and 6A-B in engaged and disengaged positions according to one example embodiment of the disclosure. Referring now to Figures 1A-E and 6A-B, the example folding stroller frame 1 can further include a frame lock latch 41 coupled to either the handle frame 30 or the front wheel frame 10. In one example embodiment, the frame lock latch 41 can be coupled to either the handle frame 30 (e.g., the lower handle frame 32) or the front wheel frame 10 adjacent the frame folding mechanism 40. The frame lock latch 41 can include a member having a first end coupled to the frame 1 and a distal, free second end and a longitudinal axis that extends between the first and second ends. The frame lock latch 41 can also include an engagement tab coupled at or near the second, free end of the member and extending orthogonally or substantially orthogonally to the longitudinal axis of the member. In certain example embodiments, the frame lock latch 41 can be rotatably coupled to either the lower handle frame 32 or the front wheel frame 10 and configured to be rotated from a storage position, where the longitudinal axis of the member is parallel to the longitudinal axis of the frame member 32 or 10 to which it is rotatably coupled, to a use position.

The folding stroller frame 1 can also include a frame lock latch receiver 42 coupled to the other one of the handle frame 30 and the front wheel frame 10 that the frame lock latch 41 is not coupled to. The frame lock latch receiver 42 can be coupled to the other one of the handle frame (e.g., the lower handle frame 32) and the front wheel frame 10 adjacent the frame folding mechanism 40 and on an opposite side of the frame folding mechanism 40 from the frame lock latch 41. The frame lock latch receiver 42 can include a receiving area for receiving and coupling to the engagement tab of the frame lock latch 41. In one example embodiment, the receiving area can include a detent, such as a recessed portion surrounded or at least partially surrounded by a raised portion, that is configured to receive at least a portion of the engagement tab in the recessed portion of the frame lock latch receiver 42.

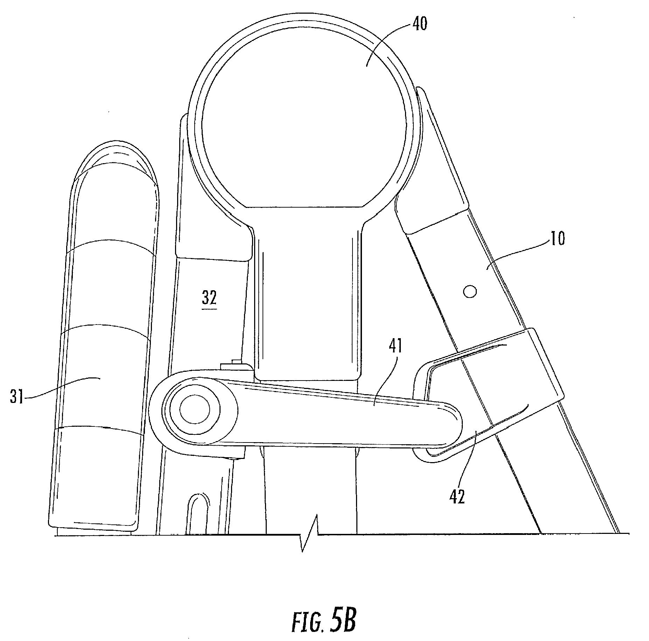

Figure 5A shows the frame lock latch 41 in the use position while the stroller frame 1 is in the unfolded, in-use configuration. Figures 5B-C show the engagement tab engaging the detent and coupling the frame lock latch 41 to the frame lock latch receiver 42 when the folding stroller frame 1 is in the folded, storage configuration. The coupling of the frame lock latch 41 with the frame lock latch receiver 42 helps to hold the frame members 30, 20, and 10 together when the stroller frame 1 is in the folded, storage configuration.

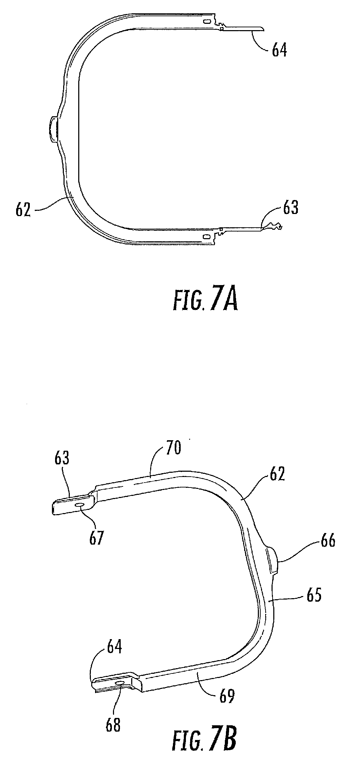

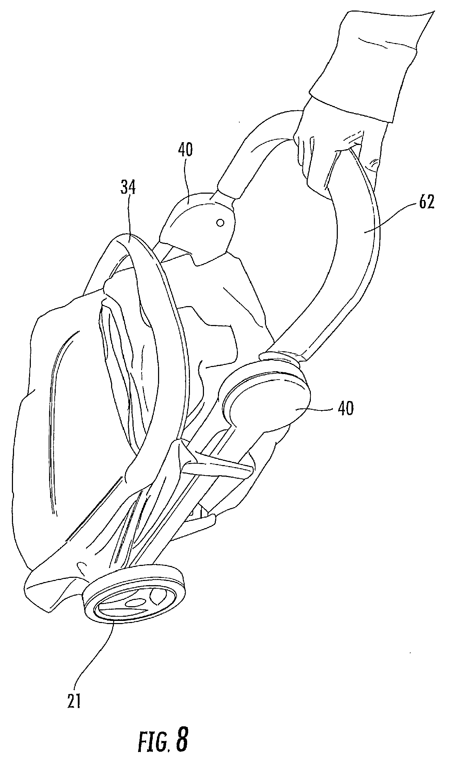

Figures 6A-6B are side and perspective views of stroller frame 1 with an optional belly bar 62 in the unfolded, in-use configuration according to one example embodiment of the disclosure. Figures 7A-7B are top and perspective views of the optional belly bar 62 for the stroller frame 1 according to one example embodiment of the disclosure. Figure 8 is a perspective view of the stroller frame 1 with optional belly bar 62 in the folded, storage configuration according to one example embodiment of the disclosure. Now referring to Figures 1A-E and 6A-8, the example foldable stroller frame 1 can further include a belly bar 62. In one example embodiment, the belly bar 62 is removably coupled to the stroller frame 1. In another example embodiment, the belly bar 62 is fixedly or movably coupled to the stroller frame 1, In one example, the belly bar 62 can be coupled (either fixedly, movably, or rotatably) to each of the frame folding mechanisms 40 of the stroller frame 1.

The belly bar 62 can include a front member 65 having a first end and a distal second end. A first side member 69 can be coupled to and extend from or be integrally formed with first end of the front member 65. In one example, the first side member 69 can have a longitudinal axis that extends in a direction orthogonal or substantially orthogonal to the longitudinal axis of the front member 65. The belly bar 62 can also include a second side member 70 that is coupled to and extends from or is integrally formed with the second end of the front member 65. In one example, the second side member 70 can have a longitudinal axis that extends in a direction orthogonal or substantially orthogonal to the longitudinal axis of the front member 65 and parallel or substantially parallel to the longitudinal axis of the first side member 69. In one example, all or a portion of the belly bar can be covered with soft goods or other fabric or plastic material.

The first side member 69 can further include an attachment member 64 disposed at a distal end of the first side member 69. The attachment member 64 can include a planar or substantially planar surface for engaging and coupling to an attachment mechanism at the frame folding mechanism 40. While the example embodiment of Figures 6A-6B and 8 shows the belly bar coupled to the planar folding mechanism 40, in other example embodiments, the belly bar is coupled to other portions of the stroller frame 1, such as one or more of the front wheel frame 10 and/or the lower handle frame 32.

The attachment member 64 can also include one or more apertures/holes 68 that extend through the attachment member. These apertures/holes 68 can be configured to receive an attachment tab, button, or other mechanism disposed on the frame folding mechanism 40. In certain example embodiments, the attachment member 64 can include a first aperture 68 that is configured to receive the attachment tab or other mechanism on the frame folding mechanism 40 when the stroller frame 1 is in an unfolded, in-use configuration, and a second aperture 68 that is configured to receive the attachment tab or other mechanism on the frame folding mechanism 40 when the stroller frame 1 is in a folded, storage configuration. In this example embodiment, each of the first and second apertures 68 are positioned on the attachment member 64 such that the belly bar 62 extends out further from the frame folding mechanism 40 when the second aperture 68 is used than when the first aperture 68 is used to couple the attachment member 64 to the frame folding mechanism 40.

The second side member 70 can further include an attachment member 63 disposed at a distal end of the second side member 70. The attachment member 63 can include a planar or substantially planar surface for engaging and coupling to an attachment mechanism at the other frame folding mechanism 40,

The attachment member 63 can also include one or more apertures/holes 67 that extend through the attachment member 63. These apertures/holes 68 can be configured to receive an attachment tab, button, or other mechanism disposed on the frame folding mechanism 40. In certain example embodiments, the attachment member 63 can include a first aperture 67 that is configured to receive the attachment tab or other mechanism on the frame folding mechanism 40 when the stroller frame 1 is in an unfolded, in-use configuration, and a second aperture 67 that is configured to receive the attachment tab or other mechanism on the frame folding mechanism 40 when the stroller frame 1 is in a folded, storage configuration. In this example embodiment, each of the first and second apertures 67 are positioned on the attachment member 64 such that the belly bar 62 extends out further from the frame folding mechanism 40 when the second aperture 67 is used than when the first aperture 67 is used to couple the attachment member 63 to the frame folding mechanism 40.

The belly bar 62 can also include a release button 66. The release button 66 can be disposed along and at least partially within the front member 65. In one example embodiment, the release button 66 can be operably coupled to the attachment mechanisms for attaching the belly bar 62 to the frame folding mechanisms 40 and can be configured to detach the belly bar 62 from each of the frame folding mechanisms when the release button 66 is depressed. The release button 66 can also include a biasing mechanism to spring-bias the release button into a first position corresponding to the belly bar being locked to each of the frame folding mechanisms 40,

While the example belly bar 62 of Figures 7A-7B is described as having multiple apertures 67-68 for attaching and extending or changing the length of extension of the belly bar 62 in relation to the frame folding mechanism 40 in an alternative embodiment, other mechanisms can be employed to change the length of extension of the belly bar 62 in relation to the frame folding mechanism, including, but not limited to, providing each of the first side member 69 and second side member 70 with telescoping members that can be extended and retracted to different lengths, making the length of each of the first side member 69 and second side member 70 manually adjustable from a first length to a second length greater than the first, making each of the attachment members 63, 64 removable from the respective first side member 69 and second side member 70 and providing replacement attachment members that are longer or shorter than the attachment members 63, 64 to increase or reduce the length of extension of the belly bar 62 from the frame folding mechanisms 40, or constructing each of the attachment members 63, 64 in two parts that are slidably adjustable to change the placement of the apertures 67, 68 and change the distance of extension of the belly bar 62 from the frame folding mechanisms 40. In one example, the first side member 69 and the second side member 70 can each be constructed of two or more telescoping members such that each of the first side member 69 and second side member 70 can be manually adjusted from a first position having a first length to a second position having a second length, wherein the second length is greater than the first length and wherein the first side member 69 and second side member 70 are longer in the second position than in the first position. Each of the minor telescoping portions of the first side member 69 and second side member 70 can further include an adjustable latching mechanism that operatively couples to a corresponding latching mechanism positioned in an outer wall of one or more of the major telescoping portions of the first side member 69 and second side member 70 (e.g., the one or more minor telescoping portions of each side member 69, 70 being configured to be slidably received into an interior passageway of each of one or more of the major telescoping portions of each side member 69, 70). The release button 66 may then be operatively coupled (e.g., via one or more cables) to the adjustable latching mechanism(s) to release the latching mechanism when the user wants to adjust the length of the first side member 69 and second side member 70. One example of an adjustable latching mechanism is a spring-loaded ball or pin and a corresponding detent or aperture for receiving the spring-loaded ball or pin to hole the side members in a stationary position. Further, the first side member 69 and second side member 70 may be telescoping and manually adjustable between more than a first and second position. Such adjustability allows the user to manually select the length of the first 69 and second 70 side members to position the belly bar at the desired height when pulling the stroller 1 in the folded configuration.

As shown in Figure 8, in the folded, storage configuration, the belly bar 62 will not rotate about the frame folding mechanism to be parallel or substantially parallel with and disposed against the handle frame 30, the front wheel frame 10, and/or the rear wheel frame 20. Instead, the belly bar 62 is configured to be the pull handle for the stroller frame 1 in the folded, storage configuration. The user can grasp the belly bar 62 when the stroller frame 1 is in the folded, storage configuration and can roll the stroller frame on the rear wheels 21 of the stroller frame. In certain example embodiments, the belly bar 62 can be adjusted from a first position to a second position, wherein the belly bar 62 extends out from the frame folding mechanism further in the second position than the first position, prior to using the belly bar 62 as a pull handle for the stroller frame in the folded, storage configuration.

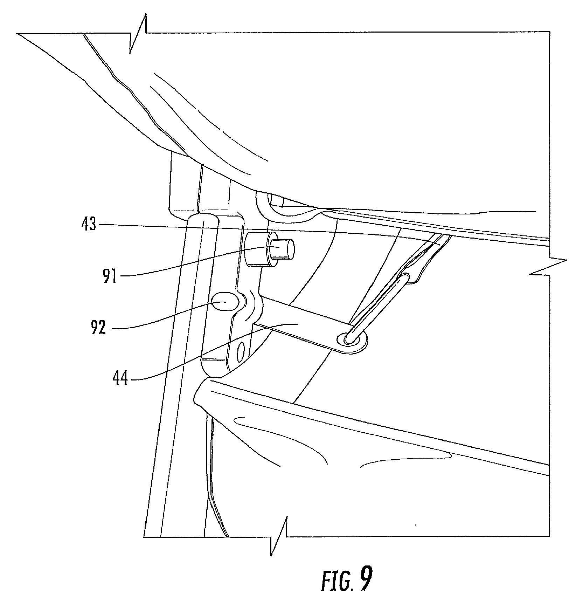

Figure 9 is a partial view of an optional secondary release mechanism 91 for the frame folding mechanism 40 of Figures 1A-E and 6A-B, Now referring to Figures 1A-E, 4, 6A-B and 9, the example secondary release mechanism 91 can be incorporated or operably coupled to one or more of the unlocking mechanisms 44 shown and described with regard to Figure 4. In certain example embodiments, the secondary release mechanism 91 is a push button; however, other forms of release mechanisms can be substituted for the push button. The secondary release mechanism 91 can include a latching mechanism 92 that is operably coupled to the unlocking mechanism 44 and can prevent the unlocking mechanism from being moved from the first, locking position to the second, unlocking position unless and/or until the push button 91 is depressed. In this manner, a user would need to depress the push button 91 and then subsequently pull the frame folding mechanism unlocking strap 43 to move the unlocking mechanisms from the first, locking position to the second, unlocking position and to allow the frame members 10, 20, and 30 to rotate about the pivot axis of the frame folding mechanism 40. While one secondary release mechanism 91 is shown, in certain example embodiments, a secondary release mechanism 91 can be operably coupled to each of the unlocking mechanisms 44 for each of the frame folding mechanisms 40 on the folding stroller frame 1.

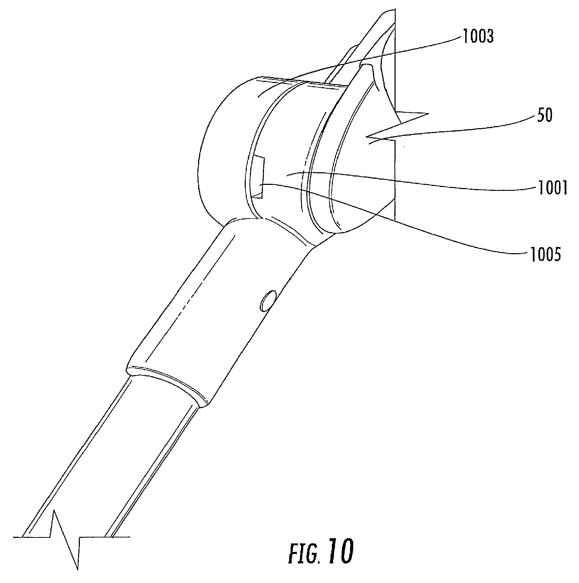

Figure 10 is a partial perspective view of an optional modification presented on one of the handle frame folding mechanisms 50 of the folding stroller frame 1 ofFigures 1A-E and6A-B according to one example embodiment of the disclosure. Referring to Figure 10, the modified handle frame folding mechanism 50 can include a first rotating hub 1001 that includes a slot 1005 along the inner portion of the hub 1001. The mechanism 50 also includes a second rotating hub 1003 that includes an adjustable tab (not shown) configured to engage and at least be partially received within the slot 1005 when the handle upper handle frame 31 is folded to be disposed alongside and substantially parallel with the lower handle frame 32. The addition of the tab and slot on the two portions of the handle frame folding mechanism can provide a more robust locking mechanism for holding the upper handle frame 31 in place in the folded configuration.

With the aforementioned disclosed structure, when the stroller frame 1 is in the unfolded, in-use configuration as shown in Figures 1A-E, the user may fold the stroller frame 1 by pressing the folding mechanism release latch 33 and rotating the upper handle frame 31 forward and in the counterclockwise direction (as shown in Figure 1A) to a position adjacent to the lower handle frame 32. The user can then pull or lift the frame folding mechanism unlocking strap 43 (or optionally press the secondary release mechanism 91 and then pull the strap 43) to release the frame folding mechanism 40 from the locked, unfolded, in-use configuration to move the stroller frame 1 to the folded, storage configuration as shown in Figures 2 and 8, so that the stroller frame 1 can be folded to reduce the length (or height) of the stroller frame 1 into a more compact size than a stroller without a folding handle frame as described herein. The frame lock latch 41 may be engaged with the frame lock latch receiver 42 to retain the stroller frame 1 in the folded configuration. Other mechanism may also be used to retain the stroller frame 1 in the unfolded and/or folded configurations.

Although example embodiments of the disclosure have been described, one of ordinary skill in the art will recognize that numerous other modifications and alternative embodiments are within the scope of the disclosure. Furthermore, while various example implementations and architectures have been described in accordance with example embodiments of the disclosure, one of ordinary skill in the art will appreciate that numerous other modifications to the example implementations and architectures described herein are also within the scope of this disclosure.

Thus, according to one or more example embodiments, a stroller can include a handle frame that includes an upper handle frame, a lower handle frame, and a handle frame folding mechanism rotatably connecting the upper handle frame to the lower handle frame. The stroller can further include a front wheel frame, a rear wheel frame, a frame folding mechanism rotatably connecting the handle frame, the front wheel frame, and the rear wheel frame, and an adjustable belly bar coupled to the stroller, wherein the adjustable belly bar is configured to be adjusted from a first length to a second length greater than the first length, The stroller can be configured such that the handle frame folding mechanism is configured to adjust the upper handle frame and the lower handle frame from an in-use, extended position to a folded, storage position. The stroller can further be configured such that in the folded, storage position the upper handle frame is disposed alongside the lower handle frame and a longitudinal axis of the upper handle frame is substantially parallel to a longitudinal axis of the lower handle frame. The stroller can further be configured such that the lower handle frame and the upper handle frame have substantially equivalent lengths. The stroller can be configured such that the front wheel frame and the rear wheel frame have substantially equivalent lengths to the length of the lower handle frame and the length of the upper handle frame. The stroller can be configured such that a length of each of the lower handle frame, the upper handle frame, the front wheel frame, and the rear wheel frame is within 25% of an average of the lengths of the lower handle frame, the upper handle frame, the front wheel frame, and the rear wheel frame. The stroller can be configured such that a length of each of the lower handle frame, the upper handle frame, the front wheel frame, and the rear wheel frame is within 10% of an average of the lengths of the lower handle frame, the upper handle frame, the front wheel frame, and the rear wheel frame. The stroller can also include a handle grip portion disposed along an end of the upper handle frame, and a handle folding mechanism latch disposed at least partially with the handle grip portion and operably coupled to the handle frame folding mechanism, wherein the handle frame folding mechanism latch is configured to release the handle frame folding mechanism from a locked configuration. The stroller can also include a frame lock latch operably coupled to the frame folding mechanism, wherein the frame lock latch is configured to move from a first position to a second position, wherein in the second position the frame lock latch releases the frame folding mechanism from a locked configuration. The belly bar of the stroller can include a first side member and a second side member, wherein each of the first side member and second side member are adjustable from the first length to the second length. The stroller can be configured such that the belly bar is coupled to at least a portion of the frame folding mechanism. The stroller can be configured such that the belly bar include one or more telescoping members configured to adjust the belly bar from the first length to the second length. The belly bar of the stroller can include a front member that includes a first end and a distal second end, a first side member coupled to the first end and removably coupled to a first frame folding mechanism, the first side member that includes at least a first and a second mutually exclusive point for coupling the first side member to the first frame folding mechanism and adjust the first side member from the first length to the second length, and a second side member coupled to the distal second end and removably coupled to a second frame folding mechanism, the second side member that includes at least a third and a fourth mutually exclusive point for coupling the second side member to the second frame folding mechanism and to adjust the second side member from the first length to the second length.

According to one example embodiment, a stroller can include a first handle frame that includes a first plurality of telescoping frame members configured to adjust the first handle frame from a first extended position to a first retracted position, a second handle frame that includes a second plurality of telescoping frame members configured to adjust the second handle frame from a second extended position to a second retracted position, a first rear wheel frame, a second rear wheel frame, at least one front wheel frame, a first frame folding mechanism rotatably connecting the at least one front wheel frame, the first rear wheel frame and the first handle frame, and a second frame folding mechanism rotatably connecting the at least one front wheel frame, the second rear wheel frame, and the second handle frame. The stroller can be configured such that a length of each of the first upper handle frame, the first lower handle frame the second upper handle frame, the second lower handle frame, the first rear wheel frame, the second rear wheel frame, and the at least one front wheel frame are substantially equal. The stroller can also include a handle grip portion coupling the first upper handle frame to the second upper handle frame and a telescoping mechanism release latch disposed along the handle grip portion and operably coupled to a first adjustable latching mechanism in the first handle frame and a second adjustable latching mechanism in the second handle frame, wherein the telescoping mechanism release latch is configured to release the first and second adjustable latching mechanisms in the first handle frame and second handle frame and facilitate adjustment of the first handle frame from the first extended position to the first retracted position and adjustment of the second handle frame from the second extended position to the second retracted position. The stroller can also include a first frame lock latch operably coupled to the first frame folding mechanism and configured to move from a first position where the first frame folding mechanism is in a locked configuration to a second position where the first frame folding mechanism is in an unlocked configuration, a second frame lock latch operably coupled to the second frame folding mechanism and configured to move from a third position where the second frame folding mechanism is in a locked configuration to a fourth position where the second frame folding mechanism is in an unlocked configuration, and a frame folding mechanism unlocking strap that includes a first end coupled to the first frame lock latch and a distal second end coupled to the second frame lock latch. The stroller can also include a belly bar coupled to the first frame folding mechanism and the second frame folding mechanism, wherein the belly bar is configured to be adjusted from a first length to a second length greater than the first length. The belly bar can include a front member that includes a first end and a distal second end, a first side member coupled to the first end and removably coupled to the first frame folding mechanism, the first side member that includes at least a first and a second mutually exclusive point for coupling the first side member to the first frame folding mechanism, and a second side member coupled to the distal second end and removably coupled to the second frame folding mechanism, the second side member that includes at least a third and a fourth mutually exclusive point for coupling the second side member to the second frame folding mechanism. The belly bar can include a front member that includes a first end and a distal second end, a first telescoping side member coupled to the first end and the first frame folding mechanism, wherein the first telescoping side member is adjustable from the first length to the second length greater than the first length, and a second telescoping side member coupled to the distal second end and the second frame folding mechanism, wherein the second telescoping side member is adjustable from the first length to the second length greater than the first length.

According to one example embodiment, a method of adjusting a stroller from an in-use configuration to a folded configuration can include providing a stroller that includes a handle frame that includes an upper handle frame, a lower handle frame aligned with the upper handle frame, and a handle frame folding mechanism rotatably connecting the upper handle frame to the lower handle frame; a front wheel frame aligned with the upper handle frame and the lower handle frame; a rear wheel frame; a frame folding mechanism rotatably connecting the handle frame, the front wheel frame, and the rear wheel frame; and an adjustable belly bar coupled to the stroller, wherein the adjustable belly bar is configured to be adjusted from a first length to a second length greater than the first length. The method can further include rotating the upper handle frame about a first pivot axis of the handle frame folding mechanism to position the upper handle frame substantially parallel with the lower handle frame, rotating the upper handle frame and lower handle frame about a second pivot axis of the frame folding assembly to abut the rear wheel frame and be substantially parallel with the rear wheel frame, rotating the from wheel frame about the second pivot axis of the frame folding assembly to abut the rear wheel frame and be substantially parallel with the rear wheel frame, and adjusting the belly bar from the first length to the second length.

Certain aspects of the disclosure are described above with reference to example methods of use of the foldable stroller frame. It will be understood that one or more steps of the described example methods may not necessarily need to be performed in the order presented, or may not necessarily need to be performed at all, according to some embodiments. Further, additional components and/or operations beyond those depicted in example methods may be present in certain embodiments.

Although example embodiments have been described in language specific to structural features and/or methodological acts, it is to be understood that the disclosure is not necessarily limited to the specific features or acts described. Rather, the specific features and acts are disclosed as illustrative forms of implementing the example embodiments. Conditional language, such as, among others, "can," "could," "might," or "may," unless specifically stated otherwise, or otherwise understood within the context as used, is generally intended to convey that certain example embodiments could include, while other example embodiments do not include, certain features, elements, and/or steps. Thus, such conditional language is not generally intended to imply that features, elements, and/or steps are in any way required for one or more embodiments.

### List of reference numerals

- 11: foldable stroller frame
- 10: front wheel frame
- 10A, 20A: a pair of first ends
- 10B, 20B: distal second end
- 11: front wheels
- 20: rear wheel frame
- 21: rear wheel
- 30: a pair of handle frames
- 31: upper handle frames
- 32: lower handle frames
- 31A, 32A: first end
- 31B, 32B: distal second end
- 33: latch
- 34: handle grip portion
- 40: frame folding mechanisms
- 41: frame lock latch
- 42: frame lock latch receiver
- 43: frame folding mechanism unlocking strap
- 43A: first end
- 43B: second end
- 44: unlocking mechanism
- 50: handle frame folding mechanism
- 60: canopy frame
- 60A: first ends
- 60B: pair of arms
- 60C: front member
- 62: belly bar
- 63, 64: attachment member
- 65: front member
- 66: release button
- 67,68: apertures/holes
- 69: first side member
- 70: second side member
- 91: secondary release mechanism
- 92: latching mechanism
- 1001: first rotating hub
- 1003: rotating hub
- 1005: slot
- A1: rotational axis
- A2: pivot axis
- L10, L20, L32: length
- W1, W2: rotational axis

## Claims

1. A stroller, comprising:
a handle frame comprising:
an upper handle frame;
a lower handle frame; and
a handle frame folding mechanism rotatably connecting the upper handle frame to the lower handle frame;
a front wheel frame;
a rear wheel frame;
a frame folding mechanism rotatably connecting the handle frame, the front wheel frame, and the rear wheel frame; and
an adjustable belly bar coupled to the stroller, wherein the adjustable belly bar is configured to be adjusted from a first length to a second length greater than the first length.

2. The stroller of claim 1, wherein the handle frame folding mechanism is configured to adjust the upper handle frame and the lower handle frame from an in-use, extended position to a folded, storage position, wherein particularly in the folded, storage position the upper handle frame is disposed alongside the lower handle frame and a longitudinal axis of the upper handle frame is substantially parallel to a longitudinal axis of the lower handle frame.

3. The stroller of one of the preceding claims, wherein the lower handle frame and the upper handle frame have substantially equivalent lengths.

4. The stroller of one of the preceding claims, wherein, the front wheel frame and the rear wheel frame have substantially equivalent lengths to the length of the lower handle frame and the length of the upper handle frame.

5. The stroller of one of the preceding claims, wherein a length of each of the lower handle frame, the upper handle frame, the front wheel frame, and the rear wheel frame is within 25% of an average of the lengths of the lower handle frame, the upper handle frame, the front wheel frame, and the rear wheel frame, or wherein a length of each of the lower handle frame, the upper handle frame, the front wheel frame, and the rear wheel frame is within 10% of an average of the lengths of the lower handle frame, the upper handle frame, the front wheel frame, and the rear wheel frame.

6. The stroller of one of the preceding claims, further comprising:
a handle grip portion disposed along an end of the upper handle frame;
a handle folding mechanism latch disposed at least partially with the handle grip portion and operably coupled to the handle frame folding mechanism, wherein the handle frame folding mechanism latch is configured to release the handle frame folding mechanism from a locked configuration.

7. The stroller of one of the preceding claims, further comprising a frame lock latch operably coupled to the frame folding mechanism, wherein the frame lock latch is configured to move from a first position to a second position, wherein in the second position the frame lock latch releases the frame folding mechanism from a locked configuration.

8. The stroller of one of the preceding claims, wherein the belly bar comprises a first side member and a second side member, wherein each of the first side member and second side member are adjustable from the first length to the second length, and/or wherein the belly bar is coupled to at least a portion of the frame folding mechanism.

9. The stroller of one of the preceding claims, wherein the belly bar comprises one or more telescoping members configured to adjust the belly bar from the first length to the second length,

10. The stroller of one of the preceding claims, wherein the belly bar comprises:
a front member comprising a first end and a distal second end;
a first side member coupled to the first end and removably coupled to a first frame folding mechanism, the first side member comprising at least a first and a second mutually exclusive point for coupling the first side member to the first frame folding mechanism and adjust the first side member from the first length to the second length; and
a second side member coupled to the distal second end and removably coupled to a second frame folding mechanism, the second side member comprising at least a third and a fourth mutually exclusive point for coupling the second side member to the second frame folding mechanism and to adjust the second side member from the first length to the second length.

11. A stroller, particularly according to one of the preceding claims, comprising:
a first handle frame comprising a first plurality of telescoping frame members configured to adjust the first handle frame from a first extended position to a first retracted position;
a second handle frame comprising a second plurality of telescoping frame members configured to adjust the second handle frame from a second extended position to a second retracted position;
a first rear wheel frame;
a second rear wheel frame;
at least one front wheel frame;
a first frame folding mechanism rotatably connecting the at least one front wheel frame, the first rear wheel frame and the first handle frame; and
a second frame folding mechanism rotatably connecting the at least one front wheel frame, the second rear wheel frame, and the second handle frame.

12. The stroller of claim 11, wherein a length of each of the first upper handle frame, the first lower handle frame the second upper handle frame, the second lower handle frame, the first rear wheel frame, the second rear wheel frame, and the at least one front wheel frame are substantially equal,

13. The stroller of claim 11 or 12, further comprising:
a handle grip portion coupling the first upper handle frame to the second upper handle frame; and
a telescoping mechanism release latch disposed along the handle grip portion and operably coupled to a first adjustable latching mechanism in the first handle frame and a second adjustable latching mechanism in the second handle frame, wherein the telescoping mechanism release latch is configured to release the first and second adjustable latching mechanisms in the first handle frame and second handle frame and facilitate adjustment of the first handle frame from the first extended position to the first retracted position and adjustment of the second handle frame from the second extended position to the second retracted position.

14. The stroller of one of the preceding claims 11 to 13, further comprising:
a first frame lock latch operably coupled to the first frame folding mechanism and configured to move from a first position where the first frame folding mechanism is in a locked configuration to a second position where the first frame folding mechanism is in an unlocked configuration;
a second frame lock latch operably coupled to the second frame folding mechanism and configured to move from a third position where the second frame folding mechanism is in a locked configuration to a fourth position where the second frame folding mechanism is in an unlocked configuration; and
a frame folding mechanism unlocking strap comprising a first end coupled to the first frame lock latch and a distal second end coupled to the second frame lock latch.

15. The stroller of one of the preceding claims 11 to 14, further comprising a belly bar coupled to the first frame folding mechanism and the second frame folding mechanism, wherein the belly bar is configured to be adjusted from a first length to a second length greater than the first length, wherein particularly the belly bar comprises:
a front member comprising a first end and a distal second end;
a first side member coupled to the first end and removably coupled to the first frame folding mechanism, the first side member comprising at least a first and a second mutually exclusive point for coupling the first side member to the first frame folding mechanism; and
a second side member coupled to the distal second end and removably coupled to the second frame folding mechanism, the second side member comprising at least a third and a fourth mutually exclusive point for coupling the second side member to the second frame folding mechanism, and/or wherein particularly the belly bar comprises:
a front member comprising a first end and a distal second end;
a first telescoping side member coupled to the first end and the first frame folding mechanism, wherein the first telescoping side member is adjustable from the first length to the second length greater than the first length; and
a second telescoping side member coupled to the distal second end and the second frame folding mechanism, wherein the second telescoping side member is adjustable from the first length to the second length greater than the first length.

16. A method of adjusting a stroller, particularly according to one of the preceding claims, from an in-use configuration to a folded configuration comprising:
providing a stroller comprising:
a handle frame comprising:
an upper handle frame;
a lower handle frame aligned with the upper handle frame; and
a handle frame folding mechanism rotatably connecting the upper handle frame to the lower handle frame;
a front wheel frame aligned with the upper handle frame and the lower handle frame;
a rear wheel frame;
a frame folding mechanism rotatably connecting the handle frame, the front wheel frame, and the rear wheel frame; and
an adjustable belly bar coupled to the stroller, wherein the adjustable belly bar is configured to be adjusted from a first length to a second length greater than the first length
rotating the upper handle frame about a first pivot axis of the handle frame folding mechanism to position the upper handle frame substantially parallel with the lower handle frame;
rotating the upper handle frame and lower handle frame about a second pivot axis of the frame folding assembly to abut the rear wheel frame and be substantially parallel with the rear wheel frame;
rotating the from wheel frame about the second pivot axis of the frame folding assembly to abut the rear wheel frame and be substantially parallel with the rear wheel frame; and
adjusting the belly bar from the first length to the second length.
